# EUROPÄISCHE PATENTSCHRIFT

(11) **EP 3 377 190 B1**
(45) Veröffentlichungstag und Bekanntmachung des Hinweises auf die Patenterteilung: **05.02.2020**
(21) Anmeldenummer: 16834270.7
(22) Anmeldetag: 18.11.2016
(51) Int. Cl.: B01D 29/46, E03B 3/20

(54) **FILTERSCHEIBE**
FILTER DISC
DISQUE DE FILTRE

(30) Priorität: 19.11.2015 DE 202015106299 U
(43) Veröffentlichungstag der Anmeldung: 26.09.2018
(73) Patentinhaber: Stüwa Konrad Stükerjürgen GmbH, 33397 Rietberg (DE)
(72) Erfinder: SCHRÖDER, Christian, 33803 Steinhagen (DE)
(74) Vertreter: Brandt, Detlef
(86) Internationale Anmeldenummer: PCT/DE2016/100537
(87) Internationale Veröffentlichungsnummer: WO 2017/084657

(56) Entgegenhaltungen:
- CH-A- 438 220
- DE-U1-202007 012 613
- FR-A5- 2 145 132
- US-A1- 2012 097 598

## Beschreibung

### Technisches Umfeld

Die Erfindung betrifft eine Filterscheibe für ein Brunnenfiltersegment, bei dem eine Mehrzahl von Filterscheiben konzentrisch übereinander beabstandet angeordnet sind, wobei die einzelne Filterscheibe als Kreisring ausgestaltet ist und bei der die äußere umlaufende Kante des Kreisringes länger ist als die innere umlaufende Kante, so dass sich zwischen zwei übereinander angeordneten Filterscheiben ein sich zur Mitte der Filterscheibe vergrößernder Durchflussspalt ergibt.

### Stand der Technik

Die eingangs geschilderten gattungsgemäßen Filterscheiben werden seit längerem, wie im Gattungsbegriff angedeutet, zum Aufbau von Brunnenfiltersegmenten genutzt. Die einzelnen Filterscheiben weisen zum Zwecke der Verbindung konzentrisch zu ihrer Mittelachse eingebrachte Durchbrechungen auf, in die jeweils eine in Achsrichtung des Brunnenfiltersegmentes verlaufende Zugstange eingeschoben wird. Im Bereich der Durchbrechungen sind die Filterscheiben mit um die Durchbrechungen umlaufenden Erhebungen ausgestattet, durch die ein festgelegter Abstand der Filterscheiben nach dem Auffädeln auf die Zugstangen gewährleistet ist.

Brunnenfiltersegmente, bei denen die geschilderten Filterscheiben zum Einsatz kommen, sind beispielsweise aus der DE 10 2006 034 618 A1 bekannt. Dort ist eine als Filterrohr bezeichnete Vorrichtung gezeigt, bei der eine Vielzahl parallel beabstandet übereinander angeordneter Filtersegmente durch entsprechende Zugstangen verbunden sind und so ein Brunnenfiltersegment bilden.

Aus der FR 2 145 132 A5 ist darüber hinaus eine Filterscheibe für ein Brunnenfiltersegment bekannt, wobei das Brunnenfiltersegment aus einer Mehrzahl von konzentrisch übereinander beabstandeten Filterscheiben aufgebaut ist. Die Filterscheibe ist dabei als Kreisring gestaltet, wobei sich zwischen zwei Filterscheiben ein sich zur Mitte der Filterscheibe vergrößernder Durchflussspalt ergibt. Auf einer Flachseite einer Filterscheibe sind dabei über dem Umfang verteilt einzelne Ausnehmungen eingebracht.

In der CH 438 220 A ist ebenfalls ein Filter dargestellt, der aus einer Mehrzahl übereinander angeordneter einzelner Filterscheiben besteht.

Die Brunnenfiltersegmente werden zur Gewinnung und gleichzeitigen Filterung von Grundwasser eingesetzt, wobei die Brunnenfiltersegmente in ein Bodenloch eingesetzt werden, welches rund um die Außenwandung des Brunnenfiltersegmentes mit Kies gefüllt wird. Das Grundwasser wird sodann durch eine an den Innenraum des Brunnenfiltersegmentes angeschlossene Pumpenleitung durch die Steinschüttung in den zwischen den übereinander angeordneten Filterscheiben vorhandenen Durchflussspalt eingesogen.

Hierbei hat sich gezeigt, dass sich nicht sämtliche Verunreinigungen durch die Steinschüttung aus dem Grundwasser herausfiltern lassen, sondern teilweise Sedimente in die Durchflussspalte des Brunnenfiltersegmentes gelangen und sich dort an der Wandung des Durchflussspaltes, d.h. an den Flachseiten der Filterscheiben ablagern. Diese Ablagerungen müssen in regelmäßigen Abständen durch einen Spülvorgang, bei dem vom Innenraum des Brunnenfiltersegmentes unter hohem Druck Reinigungsflüssigkeit durch die Durchflussspalte nach außen in die Steinschüttung gepresst wird, beseitigt werden. Dieser Spülvorgang ist naturgemäß mit einigem Zeit- und Arbeitsaufwand verbunden.

### Aufgabe der Erfindung

Ausgehend von den gattungsgemäßen Filterscheiben ist es Aufgabe der Erfindung, diese so weiter zu entwickeln, dass sich Verunreinigungen an der Oberfläche der Filterscheiben insbesondere im Einlassbereich der durch übereinander angeordnete Filterscheiben gebildeten Durchlassspalte von Brunnenfiltersegmenten verringern.

### Lösung der Aufgabe

Die gestellte Aufgabe wird für eine erfindungsgemäße Filterscheibe durch die im Anspruch 1 oder 2 offenbarte technische Lehre gelöst. Die Lösungen der Ansprüche 1 und 2 stellen dabei alternative Möglichkeiten der erfinderischen Ausgestaltung dar.

Erfindungswesentlich ist es gemäß Anspruch 1, sowie gemäß einer alternativen Ausführungsform der Filterscheibe nach Anspruch 2, dass die Eckbereiche zwischen der äußeren umlaufenden Kante der Filterscheibe und den oberen und unteren Flachseiten eine Ausnehmung aufweisen.

Sowohl durch die technische Lehre des Anspruches 1 als auch die des Anspruches 2 wird im Bereich des Durchflussspalteinlaufes eine turbulente Strömung erzeugt. Durch die turbulente Strömung werden mit dem Wassereinlauf transportierte Verunreinigungen verwirbelt, so dass sie sich im kritischen Durchflussspalteinlauf infolge der entsprechend höheren Geschwindigkeit der turbulenten Strömung nicht anlagern können. Um das Einfließen des Grundwassers in den Durchflussspalt zu verbessern und die Strömungsgeschwindigkeit in diesem Bereich zu erhöhen, so dass eine leichtere Verwirbelung des Wassers herbeigeführt werden kann, dienen die angesprochenen Ausnehmungen.

Durch die Ausnehmungen an den Eckbereichen der Filterscheibe wird prinzipiell im Einlaufbereich des Durchflussspaltes eine Düse geschaffen, wobei entsprechend den Gesetzen der Strömungsmechanik eine Düse bei Strömungen mit Unterschallgeschwindigkeit eine Erhöhung der Geschwindigkeit innerhalb der Düse und eine Absenkung des dort vorhandenen statischen Drucks gemäß der Lehre von Bernoulli hervorruft.

Versuche haben gezeigt, dass durch die geschilderten einfachen Maßnahmen eine wesentliche Verlängerung der Reinigungsspülintervalle bei den mit den erfindungsgemäßen Filterscheiben ausgerüsteten Brunnenfiltersegmenten erzielt werden können, was den Wartungsaufwand für derartige Brunnenfiltersegmente signifikant reduziert und somit die Wirtschaftlichkeit entscheidend verbessert.

Besondere Ausgestaltungen der erfindungsgemäßen Lehren ergeben sich zusätzlich durch die in den Unteransprüchen offenbarten Merkmale.

Es hat sich zur Verbesserung der Wasserverwirbelung d.h. zur Vergrößerung der turbulenten Strömung als vorteilhaft gezeigt, wenn die umlaufende Ausnehmung auf einer Flachseite der Filterscheibe mit einer Zwischenwandung versehen wird.

Die umlaufende Ausnehmung kann dabei entsprechend einer vorteilhaften Weiterbildung mindestens auf einem Teilbereich des Nutumlaufes unterbrochen sein.

Durch praktische Versuche hat es sich als vorteilhaft erwiesen, die Tiefe der Ausnehmung in einen Bereich von 0,5 bis 2 mm zu legen, wobei gleichzeitig die Nutbreite der Ausnehmung im Bereich von 2 - 8 mm liegen sollte.

Die Herbeiführung einer turbulenten Strömung wird entsprechend einer vorteilhaften Ausgestaltung der Filterscheiben zusätzlich dadurch erhöht, wenn die Ausnehmung auf beiden Flachseiten der Filterscheibe angeordnet ist.

Hinsichtlich der Wulstausbildung an den erfindungsgemäßen Filterscheiben entsprechend Anspruch 2 ist es besonders vorteilhaft und verbessert die turbulente Strömung an der Oberfläche der Filterscheibe, wenn an dieser zwei parallel beabstandete umlaufende Wulste angeordnet sind. Die Wulsthöhe sollte dabei im Bereich von 0,5 - 2 mm liegt. Analog einer besonderen Ausgestaltung gemäß Anspruch 1 kann es darüber hinaus vorteilhaft sein, wenn der Wulst auf beiden Flachseiten der Filterscheiben angeordnet ist.

Die Ausnehmung an den Eckbereichen der äusseren Kanten der Filterscheibe kann als Rundung mit einem Radius im Bereich von 0,5 - 5 mm gestaltet sein.

Selbstverständlich ist es auch denkbar, die Ausnehmung im Eckbereich der Filterscheibe als Phase auszugestalten.

Zusätzlich zweckmäßig kann es sein, wenn die erfindungsgemäß an der Filterscheibe an einer Seite vorhandene Ausnehmung gegebenenfalls mit einer Wulstausbildung kombiniert wird.

Entscheidend ist es, dass im Bereich des Einlasses in den Durchflussspalt eine an der oberen und/oder unteren Flachseite befindliche Turbulenzstelle erzeugt wird, welche durch ihre Geometrie in der Lage ist, im Bereich diesen Düsenabschnittes innerhalb der Hauptströmung eine lokal begrenzte turbulente Strömung zu erzeugen.

### Figurenbeschreibung

Nachfolgend werden verschiedene Ausführungsbeispiele des Gegenstandes der Erfindung anhand der beigefügten Zeichnungen näher erläutert. Es zeigen:
- Figur 1: eine Draufsicht auf die obere Flachseite einer Filterscheibe mit einem Querschnitt, wie er in der Figur 4 gezeigt ist,
- Figur 2: einen Querschnitt gemäß der Schnittlinie N-N aus Figur 1 durch die gesamte Filterscheibe und
- Figur 3: einen Querschnitt gemäß der Schnittlinie M-M aus Figur 1 durch die gesamte Filterscheibe.
- Figur 4: einen Querschnitt durch zwei übereinander angeordnete Filterscheiben entsprechend einer ersten Ausgestaltungsvariante des Gegenstandes der Erfindung nach Anspruch 1,
- Figur 5: einen Querschnitt durch zwei übereinander angeordnete Filterscheiben entsprechend einer zweiten Ausgestaltungsvariante des Gegenstandes der Erfindung nach Anspruch 1.
- Figur 6: eine Querschnittsdarstellung durch zwei übereinander angeordnete Filtersegmente gemäß einer dritten Ausgestaltungsvariante des Gegenstandes der Erfindung nach Anspruch 2,
- Figur 7: eine Querschnittsdarstellung durch zwei übereinander angeordnete Filterscheiben entsprechend einer vierten Variante des Gegenstandes der Erfindung nach Anspruch 2,

Die dargestellte Filterscheibe 1 ist Bestandteil eines nicht näher dargestellten Brunnenfiltersegmentes, wobei einzelne Filterscheiben 1,2 übereinander beabstandet angeordnet werden und durch Zugstangen miteinander gekoppelt sind.

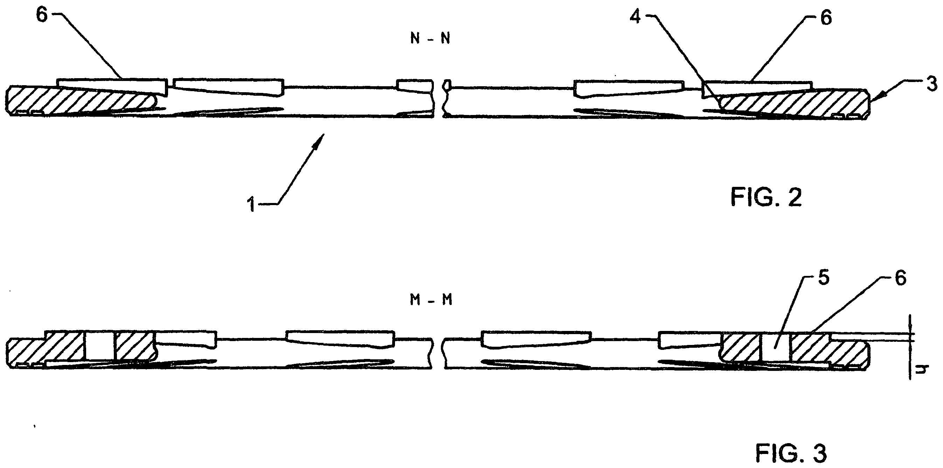

Die Filterscheibe weist in der Draufsicht eine kreisringförmige Gestalt auf, wobei im Kreisring in regelmäßigen Abständen Durchbrechungen 5 für die Zugstäbe vorhanden sind. Um die Durchbrechungen 5 herum sind kreisförmige Erhebungen 6 angeordnet, deren Höhe den Abstand von übereinander angeordneten Filterscheiben definiert. In der Darstellung der Figur 3 ist die Höhe h der Erhebung 6 gekennzeichnet.

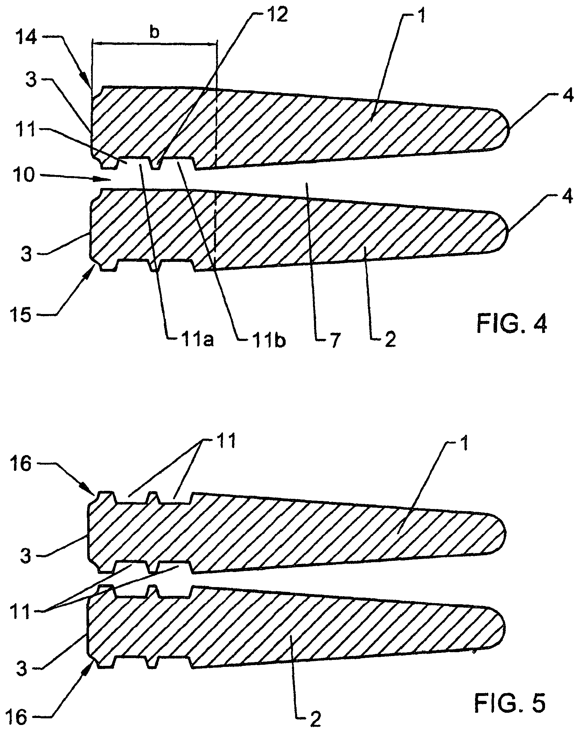

Der Querschnitt der Filterscheibe 1 außerhalb der Bereiche der Erhebung 6 verjüngt sich entsprechend der Darstellung der Figuren 2 bis 7 von der äußeren umlaufenden Kante 3 hin zur inneren umlaufenden Kante 4. Durch diese Maßnahme ergibt sich, wie aus den Figuren 4 bis 7 ersichtlich ist, zwischen jeweils zwei übereinander angeordneten Filterscheiben 1 und 2 ein sich zur Mitte der Filterscheibe vergrößernder Durchflussspalt 7.

Durch diesen Durchflussspalt 7 gelangt von der Außenseite der Filterscheibe Wasser in den Innenraum 8 eines Brunnenfiltersegmentes. Ein Brunnenfiltersegment ist an der Außenseite der Filterscheiben von einer Kiesschüttung umgeben, die in den Figuren nicht näher dargestellt ist, durch die das Wasser von Verunreinigungen befreit wird.

Wie aus der Figur 4 in einer ersten Ausgestaltungsvariante der erfindungsgemäßen Filterscheibe gezeigt, besitzt diese an ihrer Unterseite 9 im Bereich des im Querschnitt engeren Durchflussspalteinlaufes 10 eine nutförmige Ausnehmung 11. Diese nutförmige Ausnehmung 11 ist im dargestellten Ausführungsbeispiel zweigeteilt und besitzt in ihrer Mitte eine Zwischenwandung 12, die die Ausnehmung 11 in die Bereiche A und B teilt.

Die Ausnehmung 11 dient dazu, im Bereich des Durchflussspalteinlaufes eines turbulente Strömung des durchfließenden Wassers zu erzeugen. Diese turbulente Strömung verhindert eine Anlagerung von im Wasser vorhandenen Verunreinigungen an der unteren Flachseite 9 und der oberen Flachseite 13 der Filterscheibe 1.

Die Ausnehmung 11 ist dabei in einem Bereich der Filterscheibe 1 angeordnet, bei dem die Dicke der Filterscheibe 1 gleichbleibend ist, so dass sich ein rechteckförmiger Querschnitt der Breite b ergibt. Dieser Bereich ist in der Figur 4 durch eine im Querschnitt vorhandene gestrichelte Linie angedeutet.

Aus den Figuren 4 bis 7 ist darüber hinaus ersichtlich, dass die Eckbereiche 14 und 15 zwischen der umlaufenden äußeren Kante 3 und der oberen Flachseite 9 und der unteren Flachseite 13 eine Ausnehmung 16 aufweisen. Die Ausnehmung 16 ist im dargestellten Ausführungsbeispiel als Rundung ausgebildet und bildet im Durchflussspalteinlauf 10 eine düsenartige Verengung, die zu einer Beschleunigung der Strömungsgeschwindigkeit des durchfließenden Wassers führt. Der beschleunigte Wasserdurchfluss wird im unmittelbaren Anschluss an den Durchflussspalteinlauf 10 durch die Ausnehmung 11 in einen Turbulenzbereich überführt.

Versuche haben gezeigt, dass die Tiefe der Ausnehmung 11 im Bereich von 0,5 bis 2 mm liegen sollte und die Breite der Ausnehmung im Bereich von 2 bis 8 mm.

Je nach Durchflussgeschwindigkeit kann es entsprechend der Figur 5 hilfreich sein, entsprechend einer weiteren Ausgestaltungsvariante die Ausnehmung 11 auch an der oberen Flachseite 13 einer Filterscheibe 1 anzuordnen. Abgesehen von dieser Abänderung entspricht die Filterscheibe 1 in der Figur 5 derjenigen der Figur 4.

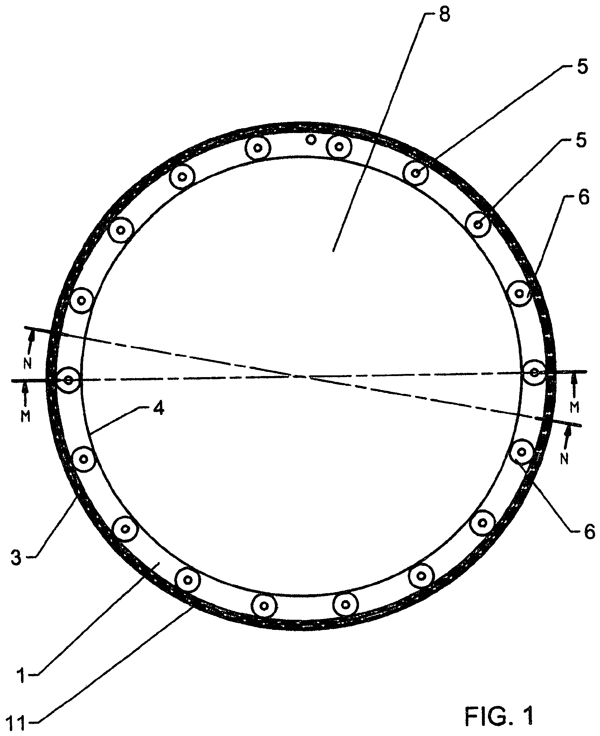

Wie aus der Figur 1 ersichtlich ist, sind die nutförmigen Ausnehmungen 11 umlaufend um die gesamte Filterscheibe außerhalb der Bereiche der Erhebungen 6 ausgeführt. Der Gesamtquerschnitt einer erfindungsgemäßen Filterscheibe 1, 2 ist ergänzend aus der Figur 2 ersichtlich.

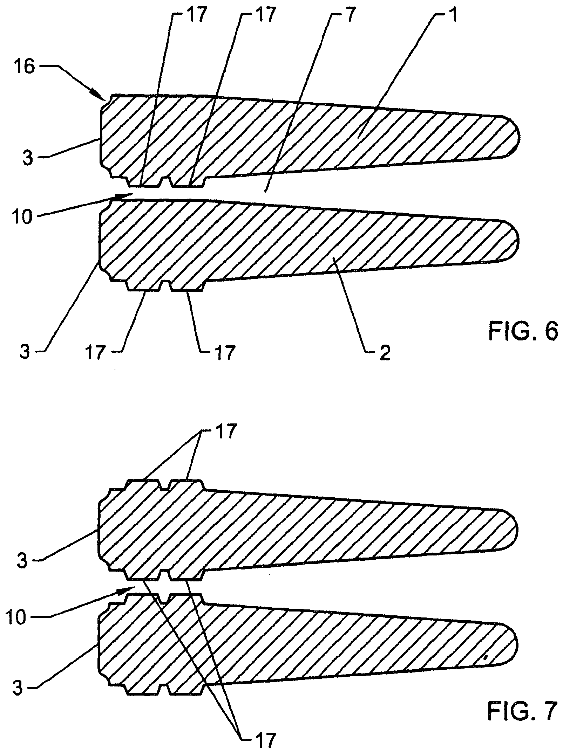

Entsprechend einer alternativen Ausgestaltung des Gegenstandes der Erfindung kann die Filterscheibe zur Erzeugung einer turbulenten Strömung im Durchflussspalteinlauf 10 auch entsprechend der Figuren 6 und 7 anstatt mit Ausnehmungen 11 mit einem oder mehreren Wulsten 17 versehen werden. Die Wulste 17 sind analog zu den Ausnehmungen 11 umlaufend angeordnet, wobei die Wulsthöhe im Bereich von 0,5 - 2 mm liegt

In der Figur 6 sind diese Wulste 17 einseitig an der unteren Flachseite 9 der Filterscheibe 1 angeordnet, wohingegen die Wulste 17 in der Ausgestaltungsvariante der Figur 7 sowohl an der unteren Flachseite 9 als auch an der oberen Flachseite 13 ausgebildet sind. Die Herausbildung der Wulste 17 hängt dabei von den strömungstechnischen Rahmenbedingungen im Durchflussspalt 7 ab.

Ansonsten entspricht die Querschnittsgestaltung der in den Figuren 6 und 7 abgebildeten Filterscheiben 1 und 2 derjenigen der Figuren 4 und 5.

### Bezugszeichenliste:

- 1: Filterscheibe
- 2: Filterscheibe
- 3: äußere Kante
- 4: innere Kante
- 5: Bohrung
- 6: Erhebung
- 7: Durchflussspalt
- 8: Innenraum
- 9: untere Flachseite
- 10: Durchflussspalteneinlauf
- 11: Ausnehmung
- 12: Wandung
- 13: obere Flachseite
- 14: Eckbereich
- 15: Eckbereich
- 16: Ausnehmung
- 17: Wulst

## Patentansprüche

1. Filterscheibe für ein Brunnenfiltersegment, bei dem eine Mehrzahl von Filterscheiben (1, 2) konzentrisch übereinander beabstandet angeordnet sind, wobei die Filterscheibe als Kreisring ausgestaltet ist und bei der die äußere umlaufende Kante (3) des Kreisringes länger ist als die innere umlaufende Kante (4), so dass sich zwischen zwei übereinander angeordneten Filterscheiben (1, 2) ein sich zur Mitte der Filterscheibe vergrößernder Durchflussspalt (7) ergibt, wobei mindestens auf einer Flachseite (9, 13) der Filterscheibe (1, 2) im Bereich des im Querschnitt engeren Durchflussspalteinlaufes (10) mindestens eine umlaufende nutförmige Ausnehmung (11) eingebracht ist, **dadurch gekennzeichnet, dass** die Eckbereiche (14, 15) zwischen der äußeren Umlaufkante (3) und den oberen und unteren Flachseiten (9, 13) der Filterscheibe (1, 2) eine Ausnehmung (16) aufweisen.

2. Filterscheibe für ein Brunnenfiltersegment, bei dem eine Mehrzahl von Filterscheiben (1, 2) konzentrisch übereinander beabstandet angeordnet sind, die als Kreisring ausgestaltet ist und bei der die äußere umlaufende Kante (3) des Kreisringes länger ist als die innere umlaufende Kante (4), so dass sich zwischen zwei übereinander angeordneten Filterscheiben (1, 2) ein sich zur Mitte der Filterscheibe vergrößernder Durchflussspalt (7) ergibt, **dadurch gekennzeichnet, dass** mindestens auf einer Flachseite (9, 13) der Filterscheibe (1, 2) im Bereich des im Querschnitt engeren Durchflussspalteinlaufes (10) mindestens ein kreisförmig parallel zur äußeren Kante der Filterscheibe umlaufender, über die Flachseite(n) (9, 13) der Filterscheibe (1, 2) vorstehenden Wulst (17) angeordnet ist und wobei die Eckbereiche (14, 15) zwischen der äußeren Umlaufkante (3) und den oberen und unteren Flachseiten (9, 13) der Filterscheibe (1, 2) eine Ausnehmung (16) aufweisen.

3. Filterscheibe nach Anspruch 1,
**dadurch gekennzeichnet, dass**
die umlaufende Ausnehmung (11) mit einer Zwischenwandung (12) versehen ist.

4. Filterscheibe nach einem der Ansprüche 1 oder 3,
**dadurch gekennzeichnet, dass**
die umlaufende Ausnehmung (11) mindestens auf einem Teilbereich des Nutumlaufes unterbrochen ist.

5. Filterscheibe nach einem der Ansprüche 1, 3 oder 4,
**dadurch gekennzeichnet, dass**
die Tiefe der Ausnehmung (11) im Bereich von 0,5 - 2 mm liegt.

6. Filterscheibe nach einem der Ansprüche 1, 3, 4 oder 5,
**dadurch gekennzeichnet, dass**
die Breite der Ausnehmung (11) im Bereich von 2 - 8 mm liegt.

7. Filterscheibe nach einem der Ansprüche 1, 3, 4, 5 oder 6,
**dadurch gekennzeichnet, dass**
die Ausnehmung (11) auf der oberen Flachseite (13) und der unteren Flachseite (9) der Filterscheibe (1, 2) angeordnet ist.

8. Filterscheibe nach Anspruch 2,
**dadurch gekennzeichnet, dass**
sich auf einer Flachseite (9, 13) der Filterscheibe (1, 2) zwei parallel beabstandete, umlaufende Wulste (17) befinden.

9. Filterscheibe nach einem der Ansprüche 2 oder 8,
**dadurch gekennzeichnet, dass**
die Wulsthöhe im Bereich von 0,5 - 2 mm liegen.

10. Filterscheibe nach einem der Ansprüche 2, 8 oder 9,
**dadurch gekennzeichnet, dass**
der Wulst (17) auf der oberen Flachseite (13) und der unteren Flachseite (9) der Filterscheibe (1, 2) angeordnet ist.

11. Filterscheibe nach einem der Ansprüche 2, 8, 9 oder 10,
**dadurch gekennzeichnet, dass**
der umlaufende Wulst (17) mindestens eine Unterbrechung aufweist.

12. Filterscheibe nach einem der Ansprüche 1 bis 11,
**dadurch gekennzeichnet, dass**
die Ausnehmung (16) als Rundung mit einem Radius im Bereich von 0,5 bis 5 mm ausgebildet ist.

13. Filterscheibe nach einem der Ansprüche 1 bis 12,
**dadurch gekennzeichnet, dass**
die Dicke der Filterscheibe im Bereich der Ausnehmung (11) oder des Wulstes (17) gleich bleibend ist.

## Claims

1. Filter disc for a well filter segment, in which a plurality of filter discs (1, 2) are arranged concentrically one above the other in a spaced-apart fashion, wherein the filter disc is configured as a circular ring and in which the outer circumferential edge (3) of the circular ring is longer than the inner circumferential edge (4) so that a flow gap (7) is created between two filter discs (1, 2) arranged one above the other, said flow gap increasing in size towards the middle of the filter disc, wherein at least one circumferential groove-shaped recess (11) is formed at least on one flat side (9, 13) of the filter disc (1, 2) in the region of the flow gap inlet (10) that is narrower in cross-section, **characterized in that** the corner regions (14, 15) between the outer circumferential edge (3) and the upper and lower flat sides (9, 13) of the filter disc (1, 2) have a recess (16).

2. Filter disc for a well filter segment, in which a plurality of filter discs (1, 2) are arranged concentrically one above the other in a spaced-apart fashion, which filter disc is configured as a circular ring and in which the outer circumferential edge (3) of the circular ring is longer than the inner circumferential edge (4) so that a flow gap (7) is created between two filter discs (1, 2) arranged one above the other, said flow gap increasing in size towards the middle of the filter disc, **characterized in that** at least one bead (17) which extends in a circular fashion parallel to the outer edge of the filter disc and which protrudes beyond the flat side(s) (9, 13) of the filter disc (1, 2) is arranged at least on one flat side (9, 13) of the filter disc (1, 2) in the region of the flow gap inlet (10) that is narrower in cross-section, and wherein the corner regions (14, 15) between the cuter circumferential edge (3) and the upper and lower flat sides (9, 13) of the filter disc (1, 2) have a recess (16).

3. Filter disc according to claim. 1, **characterized in that** the circumferential recess (11) is provided with an intermediate wall (12).

4. Filter disc according to any one of claims 1 or 3, **characterized in that** the circumferential recess (11) is interrupted at least on a subregion of the groove circumference.

5. Filter disc according to any one of claims 1, 3 or 4, **characterized in that** the depth of the recess (11) lies in the range from 0.5 - 2 mm.

6. Filter disc according to any one of claims 1, 3, 4 or 5, **characterized in that** the width of the recess (11) lies in the range from 2 - 8 mm.

7. Filter disc according to any one of claims 1, 3, 4, 5 or 6, **characterized in that** the recess (11) is arranged on the upper flat side (13) and the lower flat side (9) of the filter disc (1, 2).

8. Filter disc according to claim 2, **characterized in that** two circumferential beads (17) which are spaced apart in a parallel fashion are located on one flat side (9, 13) of the filter disc (1, 2).

9. Filter disc according to any one of claims 2 or 8, **characterized in that** the bead height lies in the range from 0.5 - 2 mm.

10. Filter disc according to any one of claims 2, 8 or 9, **characterized in that** the bead (17) is arranged on the upper flat side (13) and the lower flat side (9) of the filter disc (1, 2) .

11. Filter disc according to any one of claims 2, 8, 9 or 10, **characterized in that** the circumferential bead (17) has at least one interruption.

12. Filter disc according to any one of claims 1 to 11, **characterized in that** the recess (16) is configured as a rounding having a radius in the range from 0.5 to 5 mm.

13. Filter disc according to any one of claims 1 to 12, **characterized in that** the thickness of the filter disc is constant in the region of the recess (11) or the bead (17).

## Revendications

1. Disque filtrant pour un segment de crépine, dans lequel une multitude de disques filtrants (1, 2) sont disposés à distance les uns au-dessus des autres de manière concentrique, dans lequel le disque filtrant est configuré sous la forme d'un anneau circulaire et dans lequel le bord périphérique extérieur (3) de l'anneau circulaire est plus long que le bord périphérique intérieur (4) de sorte qu'il résulte entre deux disques filtrants (1, 2) disposés l'un au-dessus de l'autre une fente pour l'écoulement traversant (7) s'agrandissant vers le centre du disque filtrant, dans lequel au moins un évidement (11) périphérique en forme de rainure est pratiqué au moins sur un côté plat (9, 13) du disque filtrant (1, 2) dans la zone de l'entrée de fente pour l'écoulement traversant (10) plus étroite dans la section transversale, **caractérisé en ce que** les zones de coin (14, 15) présentent entre le bord périphérique extérieur (3) et les côtés plats (9, 13) supérieurs et inférieurs du disque filtrant (1, 2) un évidement (16).

2. Disque filtrant pour un segment de crépine, dans lequel une multitude de disques filtrants (1, 2) sont disposés à distance les uns au-dessus des autres de manière concentrique, qui est configuré sous la forme d'un anneau circulaire et dans lequel le bord périphérique extérieur (3) de l'anneau circulaire est plus long que le bord périphérique intérieur (4) de sorte qu'il résulte entre deux disques filtrants (1, 2) disposés l'un au-dessus de l'autre une fente pour l'écoulement traversant (7) s'agrandissant vers le centre du disque filtrant,
**caractérisé en ce qu'**est disposé au moins sur un côté plat (9, 13) du disque filtrant (1, 2), dans la zone de l'entrée de fente pour l'écoulement traversant (10) plus étroite dans la section transversale, au moins un bourrelet (17) situé en périphérie en forme circulaire de manière parallèle par rapport au bord extérieur du disque filtrant, faisant saillie au-delà du/des côté(s) plat(s) (9, 13) du disque filtrant (1, 2), et dans lequel les zones de coin (14, 15) présentent entre le bord périphérique extérieur (3) et les côtés plats (9, 13) supérieurs et inférieurs du disque filtrant (1, 2) un évidement (16).

3. Disque filtrant selon la revendication 1,
**caractérisé en ce que**
l'évidement (11) périphérique est pourvu d'une paroi intermédiaire (12).

4. Disque filtrant selon l'une quelconque des revendications 1 ou 3,
**caractérisé en ce que**
la paroi (11) périphérique est interrompue au moins sur une zone partielle de la périphérie de rainure.

5. Disque filtrant selon l'une quelconque des revendications 1, 3 ou 4,
**caractérisé en ce que**
la profondeur de l'évidement (11) se situe dans la plage de 0,5 - 2 mm.

6. Disque filtrant selon l'une quelconque des revendications 1, 3, 4 ou 5,
**caractérisé en ce que**
la largeur de l'évidement (11) se situe dans la plage de 2 - 8 mm.

7. Disque filtrant selon l'une quelconque des revendications 1, 3, 4, 5 ou 6,
**caractérisé en ce que**
l'évidement (11) est disposé sur le côté plat supérieur (13) et sur le côté plat inférieur (9) du disque filtrant (1, 2).

8. Disque filtrant selon la revendication 2,
**caractérisé en ce que**
deux bourrelets (17) périphériques tenus à distance de manière parallèle se trouvent sur un côté plat (9, 13) du disque filtrant (1, 2).

9. Disque filtrant selon l'une quelconque des revendications 2 ou 8,
**caractérisé en ce que**
la hauteur de bourrelet se situe dans la plage de 0,5 - 2 mm.

10. Disque filtrant selon l'une quelconque des revendications 2, 8 ou 9,
**caractérisé en ce que**
le bourrelet (17) est disposé sur le côté plat supérieur (13) et sur le côté plat inférieur (9) du disque filtrant (1, 2).

11. Disque filtrant selon l'une quelconque des revendications 2, 8, 9 ou 10,
**caractérisé en ce que**
le bourrelet (17) périphérique présente au moins une interruption.

12. Disque filtrant selon l'une quelconque des revendications 1 à 11,
**caractérisé en ce que**
l'évidement (16) est réalisé sous la forme d'un arrondi avec un rayon dans la plage de 0,5 à 5 mm.

13. Disque filtrant selon l'une quelconque des revendications 1 à 12,
**caractérisé en ce que**
l'épaisseur du disque filtrant reste identique dans la zone de l'évidement (11) ou du bourrelet (17).
